# EUROPEAN PATENT SPECIFICATION

(11) **EP 4 364 437 B1**
(45) Date of publication and mention of the grant of the patent: **11.11.2026**
(21) Application number: 21739618.3
(22) Date of filing: 01.07.2021
(51) Int. Cl.: H04W 4/02, H04W 4/44, H04W 64/00, G01S 5/00, G01S 5/02

(54) **QUALITY OF SERVICE BASED POSITIONING**
AUF DIENSTQUALITÄT BASIERENDE POSITIONIERUNG
QUALITÉ DE SERVICE BASÉE SUR LE POSITIONNEMENT

(43) Date of publication of application: 08.05.2024
(73) Proprietor: Telefonaktiebolaget LM Ericsson (publ), 164 83 Stockholm (SE)
(72) Inventor: HAMMARBERG, Peter, 431 36 Mölndal (SE); SAHLIN, Henrik, 435 41 Mölnlycke (SE); FODOR, Gabor, 165 52 Hässelby (SE); BLASCO SERRANO, Ricardo, 02260 Espoo (FI); GOPINATH, Smriti, 17159 Solna (SE)
(74) Representative: Ericsson
(86) International application number: PCT/EP2021/068239
(87) International publication number: WO 2023/274546

(56) References cited:
- WO-A1-2021/063497
- WO-A1-2021/063497
- US-A1- 2016 029 162
- US-A1- 2016 029 162
- "3 rd Generation Partnership Project; Technical Specification Group Radio Access Network; Evolved Universal Terrestrial Radio Access (E-UTRA); LTE Positioning Protocol (LPP) (Release 15)", 30 September 2019 (2019-09-30), XP051799985, Retrieved from the Internet <URL:https://ftp.3gpp.org/3guInternal/3GPP_ultimate_versions_to_be_transposed/sentToDpc/36355-f50.zip 36355-f50.docx> [retrieved on 20190930]
- "3 rd Generation Partnership Project; Technical Specification Group Radio Access Network; Evolved Universal Terrestrial Radio Access (E-UTRA); LTE Positioning Protocol (LPP) (Release 15)", 30 September 2019 (2019-09-30), XP051799985, Retrieved from the Internet <URL:https://ftp.3gpp.org/3guInternal/3GPP_ultimate_versions_to_be_transposed/sentToDpc/36355-f50.zip 36355-f50.docx> [retrieved on 20190930]

## Description

### TECHNICAL FIELD

Embodiments herein relate to positioning based service related actions in dependence of a quality of service related to the positioning data.

### BACKGROUND

Positioning and related services are increasingly important to cellular network operators, network subscribers, advertisers, and others. Smart phones and other intelligent mobile devices with GPS receivers offer significant new opportunities for exploiting subscriber location information in various contexts. Some of these contexts relate to commercial activities, e.g., location-based marketing and advertising, while others relate to emergency services, law enforcement operations, and mobility management or other network-centric operations.

Vehicles are equipped with computer-operated functionalities that facilitate the driver's tasks or even to replace the driver altogether. We refer to these functionalities as advanced driving services. Examples of advanced driving services are any of the following:
- Cooperative awareness messaging, where different vehicles exchange information about the position, heading, etc. The purpose of the exchange is to provide an additional layer of information (e.g., through a map visualization) to be used for driving.
- Cooperative driving or maneuvering, where different vehicles exchange information with the aim of coordinating their driving actions. For example, cooperative lane change, etc.
- Tele-operated driving, where the driver remotely operates the vehicle, e.g., through a video stream.

In particular applications such as advanced driving services which make use of information about the position of a device/object or vehicle. The position may refer to that of the vehicle operating the advanced driving service or that of other vehicles or objects (e.g., traffic lights, signs, etc.).

Different services may require different levels of positioning accuracy. For example, cooperative awareness messaging may be operated when the accuracy is 2m or better, whereas cooperative driving may require 20cm or better accuracy for proper operation. Moreover, different grades of service may be possible depending on the accuracy of the positioning information. For example, 50cm accuracy may be enough for cooperative driving at relative speeds not exceeding 20 km/h, whereas 25cm accuracy may allow relative speeds up to 40 km/h.

Acquiring accurate position information in general requires multiple positioning sources. These could include global navigation positioning systems (GNSS), e.g., GPS, and radio access technology (RAT) based positioning for absolute positioning, and radar, camera and lidar for relative positioning.

For RAT based positioning, 3^{rd} Generation Partnership Project (3GPP) has standardized a framework for exchanging signals and assistance information for positioning services. Within this framework, the mobile terminal, wireless device or user equipment, in this case the vehicle, can indicate a required QoS level from the network, for a given positioning event.

In WO 2011/123016 A1, a method of selecting the positioning method(s) used
to respond to given positioning requests is considered and uses historical performance data reflecting the actual performance yielded by one or more of the positioning methods that are generally available for selection. For example, a positioning node maintains or otherwise has access to historical data reflecting the QoS obtained for at least some of the positioning methods supported by the node. Correspondingly, the node compares the QoS requirements associated with an incoming positioning request to the historical performance data, to identify the positioning method(s) that appear to best satisfy the requirements. The positioning node therefore selects the "best" method(s) for responding to a positioning request, not based on "generic" performance characteristics of those methods, but rather based on observed real-world performance of those methods, as applicable to the particular operating environment (radio environment) in which the positioning methods are carried out.

Given the increased reliance on positioning and in particular the QoS of the positioning data provided for a critical service such as advanced driving services there is a need to improve the handling of such services with respect to the positioning QoS required.

Additionally, 3GPP discuss to include GNSS integrity assistance information exchange in release 17. In such integrity procedures, the network and device would exchange information about anticipated events that may compromise GNSS positioning. Such events may include different kinds of errors characterized by probabilities or error distributions, and deliberate events such as spoofing and jamming.

US 2016/0029162 A1 describes various techniques for Location Services (LCS) Assistance Data broadcast, for example for implementation in LTE and LTE-A systems. The embodiments described herein may use the LPP/LPPe positioning protocol, by making use of existing unsolicited Provide Assistance Data (PAD) messages. Embodiments avoid the need to define and implement a separate broadcast Assistance Data protocol. Additional exemplary embodiments for scheduling and verifying of the broadcast Assistance Data messages are described herein.

WO 2021/063497 A1 describes an apparatus comprising: at least one processor; and at least one memory including computer program code; the at least one memory and the computer program code configured to, with the at least one processor, cause the apparatus at least to: receive an indication indicating that positioning accuracy information associated with at least one potential future position of a terminal is to be provided to; and provide the positioning accuracy information associated with the at least one potential future position of the terminal.

3GPP TS 36.355 V15.5.0 (2019-09) "3rd Generation Partnership Project; Technical Specification Group Radio Access Network; Evolved Universal Terrestrial Radio Access (E-UTRA); LTE Positioning Protocol (LPP) (Release 15)" contains the definition of the LTE Positioning Protocol (LPP), where LPP is used point-to-point between a location server (ESMLC or SLP) and a target device (UE or SET) in order to position the target device using position-related measurements obtained by one or more reference sources.

### SUMMARY

In certain embodiments, a framework is provided for a network entity to provide positioning QoS (Quality of Service) information to a UE, where the information in general has a predictive and, in some cases, collaborative nature. Additionally, the invention describes how such information can be connected to specific (advanced driving) services with certain positioning accuracy requirements, and to the admission to such services.

The invention is defined by a method according to claim 1 and a user equipment according to claim 12. Further embodiments are defined by the dependent claims.

### BRIEF DESCRIPTION OF THE DRAWINGS

Figure 1 is a block diagram illustrating an example process according to examples of the present disclosure.
Figure 2 is a signalling sequence according one or more examples of the present disclosure.
Figure 3 is a signalling sequence according to one or more examples of the present disclosure.
Figure 4 is a flow diagram illustrating an exemplary method according examples of the present disclosure.
Figure 5 is a flow diagram illustrating an exemplary method according to examples of the present disclosure.
Figure 6 is a block diagram illustrating example system comprising communication elements according to one or more examples of the present disclosure.
Figure 7 is a block diagram illustrating example physical units of a user equipment device useful for implementing one or more methods described herein, according to one or more embodiments of the present disclosure.
Figure 8 is a block diagram illustrating example physical units of a network node useful for implementing one or more methods described herein, according to one or more embodiments of the present disclosure.
Figure 9 is a block diagram illustrating example physical units of a host node useful for implementing examples described herein, according to one or more embodiments of the present disclosure.
Figure 10 is a block diagram illustrating example software modules of a virtualized environment useful for implementing examples described herein.
Figure 11 is a block diagram illustrating example process for an over the top service in accordance with one or more examples of the present disclosure.

### DETAILED DESCRIPTION

The current QoS framework for positioning, or exchange of assistance data, as standardized by the 3GPP organization, does not allow the wireless device to acquire information about expected future positioning accuracies. As a consequence, UEs engaged in services requiring positioning information (e.g., vehicles using advanced driving services) need to take a conservative approach by, for example, assuming worst case positioning information or accuracy.

For RAT based positioning, 3GPP has standardized a framework for exchanging signals and assistance information for positioning services. Within this framework, the wireless device, in this case the vehicle, can indicate a required QoS level from the network, for a given positioning event. The positioning entity in the network can then indicate whether this can be met, allowing the vehicle to adapt its behaviour.

In some of the solutions proposed by the present disclosure include a framework for allowing the determination and exchange of a quality of service (QoS) information for positioning related sensors and services. A positioning based service is a service which is reliant on positioning and in particular on certain quality/accuracy/persistence of the positioning information. The QoS information can be related to the quality expected from an absolute positioning technology (GNSS, RAT etc.), or expected quality of local sensors (camera, lidar, radar, etc.). The information can also be related to some (advanced driving) service. Additionally, one or more solutions enable the exchange of positioning related information between UEs, potently with additional processing of such data.

The information requested by the UE can target a specific location and time duration, or target QoS information updates related to the applicability of a specific service.

In some examples an entity in the network coordinates the exchange of positioning QoS related information, which may additionally include the positioning or QoS capabilities and requirements from the different UEs engaged in a specific service. In addition, the network may incorporate information that is not directly coming from the UE requesting the information or any other UE. This type of information includes GNSS availability, current propagation conditions, current load in the network, and radio access node (e.g. base station) capabilities and measurements.

In some embodiments, information is exchanged between involved nodes and devices that allows the UEs to adapt their operations to the available positioning QoS. In other embodiments, the network controls the admission of UEs to a specific service based on the available or required positioning QoS.

In one embodiment, the base station provides one QoS information to the served UEs directly (typically as soon as possible) after a request from a UE. In another embodiment, the base stations or other network nodes provide an update to served UEs when they have detected a significant change in the QoS as compared to a previous QoS information.

By allowing the vehicle to obtain the expected QoS for positioning services in the near or extended future, either about itself or other road users, or relative to some (advanced driving) service, the vehicle can adapt its behaviour to better suit the expected or predicted positioning accuracy. The action executed can be to take part or refrain from taking part in a service, reduce speed, select a separate route, hand over control to a human driver, rely on local and onboard sensor measurements, etc.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. In particular, a network node may be comprised in a non-terrestrial network as part of a wireless communications system. A non-terrestrial network (NTN) comprises communications satellites and network nodes. The network nodes may be terrestrial or satellite based. For example the network node may be a satellite gateway or a satellite based base station, e.g. gNB. Other examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

As used herein, wireless device refers to a device capable, configured, arranged and/or operable to communicate wirelessly with network nodes and/or other wireless devices. Unless otherwise noted, the term wireless device may be used interchangeably herein with user equipment (UE). Communicating wirelessly may involve transmitting and/or receiving wireless signals using electromagnetic waves, radio waves, infrared waves, and/or other types of signals suitable for conveying information through air. In particular the wireless device may be involved in communication with a non-terrestrial network nodes, such as communications satellites and satellite based gateways or base stations. In some embodiments, a wireless device may be configured to transmit and/or receive information without direct human interaction. For instance, a wireless device may be designed to transmit information to a network on a predetermined schedule, when triggered by an internal or external event, or in response to requests from the network. Examples of a wireless device include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A wireless device may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a wireless device may represent a machine or other device that performs monitoring and/or measurements, and transmits the results of such monitoring and/or measurements to another wireless device and/or a network node. The wireless device may in this case be a machine-to-machine (M2M) device, which may in a 3GPP context be referred to as an MTC device. As one particular example, the wireless device may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a wireless device may represent a vehicle or other equipment that is capable of monitoring and/or reporting on its operational status or other functions associated with its operation. A wireless device as described above may represent the endpoint of a wireless connection, in which case the device may be referred to as a wireless terminal. Furthermore, a wireless device as described above may be mobile, in which case it may also be referred to as a mobile device or a mobile terminal.

This document discloses several methods for UEs to exchange, request, and act on positioning QoS information as part of a certain service. Positioning information is described in further detail below. Although most of the examples described involve vehicles and vehicular services, these are for understanding the invention, which is not thereby limited to those use cases. For example, the invention is applicable in use cases in which first responders enter a hazard area, etc, or any wireless remote controlled service which is dependent on reliable consistent positioning data. In some examples the request and exchange of such information can also be done independently of any specific service, i.e. not at the same time or not in connection with a particular service.

Common to all the methods is the exchange of information between one or more UEs via a network node:
- The UE may provide position QoS information for the current position and time to the network node, and/or may request the QoS data associated with positioning for a different place and time form the network node. QoS data associated with positioning can include estimated accuracy or error bounds, confidence interval, validity period or a geographical area or cell identifier within which the positioning information is valid.
- The network node provides QoS information associated with positioning for a given service, or the availability of the service itself.

In one implementation, the network node acts as a broker, handling queries to a database containing positioning QoS information, labelled with time and location, shared by other UEs. In a different implementation, the network node predicts the positioning QoS information for a requested time and position given the entries in the database, potentially containing information from other sources then involved UEs.

In one embodiment, the database is distributed, or located with a dedicated UE. The message exchange could then be over a device to device communication interface.

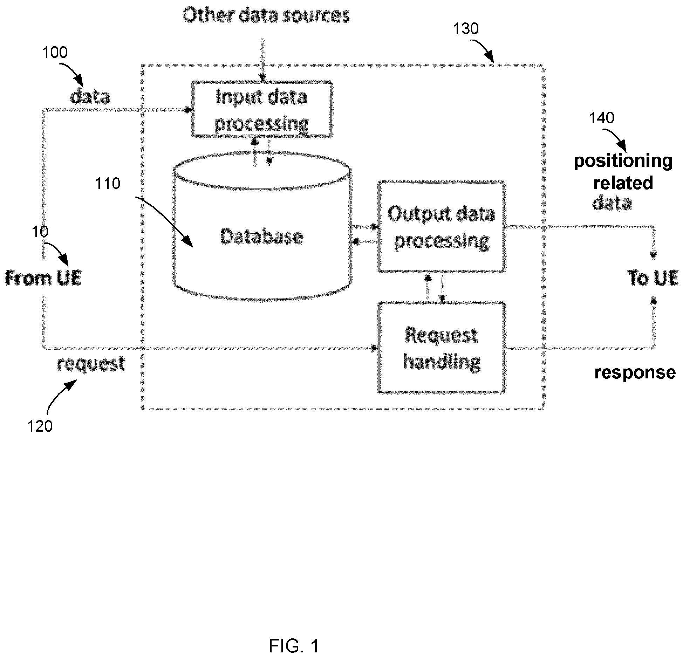

An illustration is given in Figure 1, where a UE can provide input data 100, that may be processed, verified, labelled, etc. before being input in the data base 110. Additionally, the UE can provide a request 120 for a certain service, or information. The network node 130 can, depending on the nature of the request, deliver positioning related data 140, or information related to a service request. More details are provided in later sections.

In this disclosure, we distinguish between positioning information and positioning QoS information.

Positioning information can include localization horizontal distance measures (e.g. latitude, longitude), vertical placement (such as meters above sea level). Also, positioning information can include orientation of the device (or vehicle) in three degrees of freedom, as well as speed and acceleration of both localization and orientation. Orientation, speed and acceleration are measurements typically valuable for flying objects.

Positioning QoS information refer to information that characterizes the quality of the positioning information that is available (e.g., at a UE, based on the positioning methods it uses), or required (e.g., to participate in a service).

For example, positioning QoS information may refer to:
- Accuracy of the positioning information, including
   - Resolution (e.g., in distance units) expressed mathematically as a standard deviation, variance, distribution, probably density functions, etc.
   - The number of GNSS satellites that are being received, or GNSS integrity related information.
   - The strength of a radio signal conveying a signal used for positioning, etc.
   - Optical visibility (related to cameras and lidar)
   - Interference situation for radar signals
- The update rate of the positioning information.
- The method used for acquiring positioning information (e.g., GNSS, NW-based, sensor-based, etc.), or the number of methods that are combined, etc.

As mentioned earlier, in one or more implementations, the NW derivation of QoS can be made based on prior knowledge of the QoS, e.g. historical QoS data, recent information provided by vehicles/UEs or roadside infrastructure, current weather conditions, traffic load in network (with impact on available resources for transmitting and receiving localization related signals), etc. The QoS calculations can also be made based on predictions of future conditions, e.g., weather forecasts, load dependent availability of radio network positioning reference signals, processing load in network nodes performing position calculations (potentially using uploaded vehicle sensor data). In some examples these calculations are performed by a dedicated network node e.g. a location management function (LMF).

Since the accuracy of the calculated position could depend on the processing capabilities and available sensors at the vehicle, interpretation of the QoS indicators may be user specific. In some examples, as part of a request message to the NW node, or as part of a reporting function, the UE prepares a position information QoS report. The content of this report may be given by pre-configuration or based on a configuration by the NW node. In some examples the following steps are included:
i). Information from the different positioning sensors are collected by the UE, e.g. related to GNSS, radar, cameras, RAT signals, etc. as described previously.
ii). Based on the information from the sensors, the QoS information is prepared by the UE, including accuracies and availability, etc. as described previously.
iii). The UE estimates relevant position information and current time.
iv). The report is created including positioning QoS, current time and position.

In one example a UE is equipped with a camera, a GNSS receiver and a 5G NR modem, capable of receiving positioning reference signals (PRS). The UE is configured to report the number of GNSS satellite links, and the number of detected base station (BS) in line-of-sight (LOS), along with camera visibility (on a scale 0-5). The location information includes position and velocity. Based on measurements from the different sources, the UE detects 4 GNSS links, 2 BSs LOS links, and the visibility is judged to be 3. The UE then prepares a report including its current position and velocity estimate and time.

The UE actions taken upon receiving a positioning QoS information update from the serving network node may include:
i). Check the QoS towards the requirements of the service being operated.
ii). If the service requirements are met, continue operating service, else, abort service, reduce service level, or adjust the service.

Appropriate adjustments may include, restricting the vehicle speed, perform route planning to guarantee service continuity along the route, inform or warn the driver, and hand over vehicle operations to the driver, or ultimately, turn off the service.

In one example a vehicle is operating a lane keeping service, which requires 20cm of lateral accuracy. It can currently meet the requirement by fusing GNSS and 5G NR signal measurements. Fusion is the process of combining multiple sensor inputs from disparate sources. This can be done in different ways, e.g., using a Kalman filter. It receives a positioning QoS information update, corresponding to a position 500m ahead. The report indicates that the number of 5G NR signals will decrease, for example due to reduced coverage or cell configuration. In some examples "reduced coverage" refers to channel related phenomena like radio blockage (e.g. by a building) or simply increased path loss (making signal undetectable); and "cell configuration" may refer to a change in, e.g., PRS configuration or any action that would impact the available signals or the quality of the same. This could be due to adaptations of the cell shape in an adaptive antenna setting for example. The device judges that the accuracy of the positioning system will not meet the 20cm required for the lane keeping service. The service is disabled, and the driver is informed to regain control. In some examples the UE autonomously disables the service. In other examples the UE reports the determination to a network server/host responsible for the lane keeping service when then disables the service or instructs the UE to disable the service.

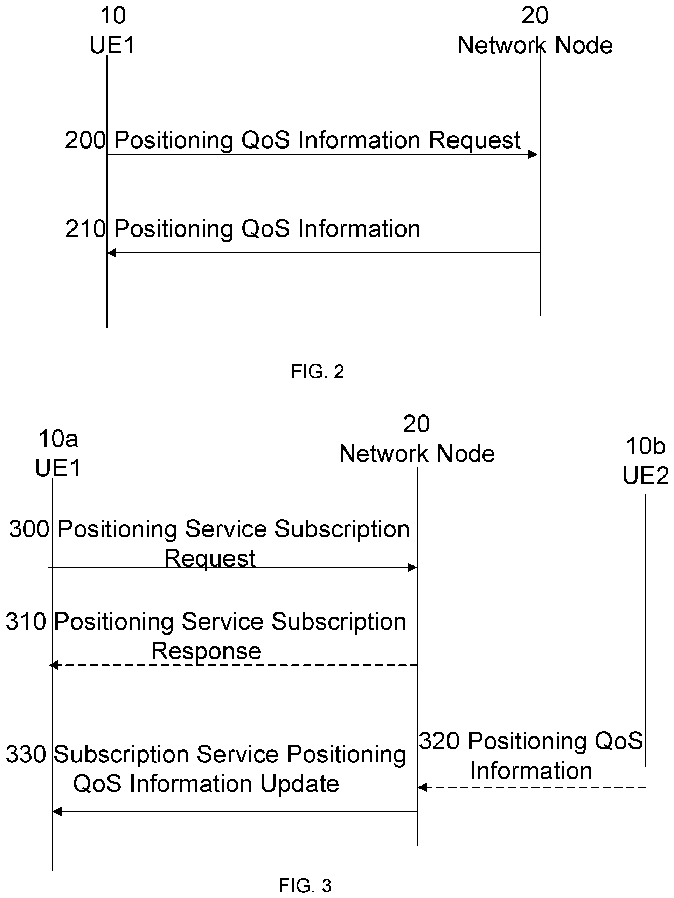

An example information exchange: request-response model relevant to one or more embodiments will now be described, in conjunction with Figure 2.

This method includes the following basic steps:
1. UE10, which is interested in operating a service in a certain area, sends a request 200 to the NW node 20 for positioning QoS information. The request 200 may indicate
   - The location and time when the service is to be used.
   - The service to be used. The indication may be explicit (e.g., if multiple services can be signalled with the same message) or implicit (e.g., if only one service is configured) In addition, the request 200 may also indicate
   - Positioning QoS information about UE1 itself, prepared as described previously.
2. Based on the information provided by UE1,10, and any additional positioning QoS information gathered by the NW, e.g. network node 20. the NW node 20 sends a message 210 to UE1, 10, containing QoS information associated with the location and time (from the message in Step 200). The other QoS information gathered by the NW may come from any of the following:
   - UEs participating in a given service. The NW node may also gather information about the (intended) trajectories from the UEs, to be used for predictions of future UE positions.
   - Other sources than UEs. For example: information about GNSS coverage, weather forecasts, radio propagation conditions for GNSS signals, cellular coverage, availability of NW-assisted GNSS coverage, accuracy of NW-based positioning solutions, etc.
3. Upon receiving the response message, UE1 adapts its behaviour for the service of interest, as described previously.

In one example embodiment, the QoS information sent by the NW only contains an indication on whether the service for the UE1, 10, (as indicated as part of request in Step 200) can be supported or not, given the expected accuracy of positioning in the area of interest.

In some examples, UE1, 10, is interested in operating a cooperative driving service. Operation of the service depends on the accuracy of the positioning information. This is determined not only by the capabilities of UE1, 10, but also by the capabilities of other UEs:
- With low-accuracy of positioning information (e.g., 1 m or better), a limited set of cooperative manoeuvres can be used.
- With high-accuracy of positioning information (e.g., 20 cm or better), a full set of cooperative manoeuvres can be used.

UE1, 10, sends a request message 200 to the NW node 20, indicating that it is interested in the cooperative driving service along a certain route during a certain time interval. In addition, UE1 indicates that it can perform positioning with an accuracy of 20 cm or better. The NW node, having gathered positioning information from other nodes that only can guarantee an accuracy of 1 m or better, informs UE1, 10 at step 210 that for a given area and time, the expected accuracy is only 1 m or better.

Based on the received message 210 from the NW node, UE1 adapts its driving behaviour (e.g., by using the limited set of cooperative manoeuvres or by choosing an alternative route).

In some examples a subscription model is employed as depicted in Figure 3. This method includes the following basic steps:
1. UE1,10a, interested in operating a specific service with a given requirement on positioning accuracy requests 300 the desired service from a network node. The network node 20 providing such a service may be the same or a different logical or physical entity from a node which provides the QoS positioning information described previously. The UE indicates that it has an interest to receive updates from the NW containing QoS information for that specific service. This could, e.g., be in the form of a subscription service. The subscription may be associated with a geographical area or with a restricted time duration.
   - Together with the subscription message, or in a separate message, UE1, 10a, may provide positioning QoS information about itself, prepared as described previously.
2. Upon detecting a condition affecting the positioning QoS, the NW node sends 330 a message to UE1 with up-to-date positioning QoS information.
3. Upon receiving the response 330 message, UE1, 10a, adapts its behaviour, as described herein, for example to suspend a specific service or limit the autonomy based on the updated QoS of the positioning information, when the QoS has become worse and drops below predefined thresholds. Alternatively, if the QoS has improved to be at or above said thresholds then the specific service or certain levels of service may be resumed on notification of the improved positioning QoS.

In some examples, the condition triggering 330 is the reception (e.g. at the NW node) of a message 320 from another UE, 10b, containing positioning QoS information. For example, a UE2, 10b may notify the NW node that it can do positioning with low accuracy. This in turn affects the service operated by UE1, 10a.

In some examples, the condition triggering Step 330 is a change in the speed of the UE2, 10b, that requires a change in the update rate of the positioning information for the information to be timely and valid. This may be indicated by the UE2, 10b, in positioning QoS information at step 320 or may be determined by the network node by other means. In some examples the speed of UE 1, 10b, changes and this is determined by the network node based on the positioning information provided by UE1, 10a, as mentioned previously. This step is not shown in Figure 3 but it is understood that UE1, 10b, may also provide positioning QoS information according to step 320.

In some examples, the condition triggering Step 330 is related to the availability of GNSS or conditions of GNSS. For example, if the propagation conditions change in a way that it impacts performance of positioning beyond what is normal, etc. or if some satellite is not operational, etc.

In some examples, the condition triggering Step 330 is related to a change in the expected operations of the local sensors of the UE1, e.g., related to optical visibility and radar interference conditions. Such information could, e.g., be provided by other UEs or roadside equipment (containing cameras and other sensors) connected to the NW.
wherein another example where the UE1 is interested in operating a cooperative driving service, operation of the service depends on the accuracy of the positioning information. This is determined not only by the capabilities of UE1 but also by the capabilities of other UEs:
- With low-accuracy of positioning information (e.g., 1 m or better), a limited set of cooperative manoeuvres can be used.
- With high-accuracy of positioning information (e.g., 20 cm or better), a full set of cooperative manoeuvres can be used.

UE1 sends a request message 300 to the NW node, indicating that it is interested in the cooperative driving service along a certain route during a certain time interval. In addition, UE1 indicates that it can perform positioning with the required accuracy (e.g. with an accuracy of 20 cm or better). This message subscribes UE1 to a notification service.

At a later point in time, the NW node gathers new information from other nodes that can only guarantee an accuracy of 1 m or better. In response to this event, the NW node provides updated information 330 to UE1 that for a given area and time, the expected accuracy can only be 1 m or better.

Based on the received message from the NW node, UE1 adapts its driving behaviour (e.g., by using the limited set of cooperative manoeuvres or by choosing an alternative route).

In another approach for information exchange: admission control procedures are employed. This method includes the following basic steps:
1. UE1, which is interested in operating a specific service in a certain area, sends a request 300 to the NW node for operating this service positioning QoS information. The request indicates
   - The location and time when the service is to be used.
   - The service to be used.
   - Positioning QoS information about UE1 itself, prepared as previously described.
2. Based on the information provided by UE, and positioning QoS information gathered from other sources, the NW node decides whether to allow, or not allow, UE1 to participate in the service in the requested location at the intended time. The NW sends a message 310 to UE1 with the admission decision.
3. Upon receiving the response message, UE1 adapts its behaviour depending on the availability of service of interest, as described herein.

In some examples, the admission message in Step 310 includes some limitations for the service. For example, UE1 may be allowed to participate in the service but the service may be restricted to a set of manoeuvres or a certain positioning accuracy, given that the UE is moving within a certain speed range for which the update rate of the positioning information is applicable.

In some examples, upon receiving the request 300 from UE1, the NW node 20 may activate or reconfigure some features related to positioning. For example:
- The NW node may trigger the activation of some high-accuracy positioning feature such as additional transmission of positioning reference signals.
- The NW node may activate some NW-assisted GNSS functionality

In some examples, UE1 is interested in participating in a cooperative driving service. Operation of the service depends on the accuracy of the positioning information. The request also indicates location and time when the service is to be used.

The NW node, having gathered information from other UEs, and having authorized them individually, allows UE1 to participate but it informs UE1 that only a limited set of cooperative driving functionalities, which only require limited-accuracy positioning information (e.g., 1 m or better) can be used.

Based on the received message from the NW node, UE1 adapts its driving behaviour (e.g., by using the limited set of cooperative manoeuvres or by choosing an alternative route).

In some examples, the NW node corresponds to a base station (e.g., an eNB or a gNB).

In some examples, the NW node is a server running an application that interacts with the UE. The server may be in the core network or outside of it (e.g., aserver in the Internet).

In some examples, positioning relies on communication between the UE and the NW. For example, the UE may use a sensor or a camera, send the data to the NW node (or to some other node), who processes the data and sends back a position to the UE.

In a further embodiment, the NW node predicts which positioning QoS can be provided based on a prediction of the throughput between UE and NW. For example, if the throughput is very low, positioning may not be as accurate as when the throughput is high, e.g., due to low resolution and quality of uploaded sensor data.

It should be clear for the skilled person that the request-response model and the subscription model can be combined to achieve an event triggered or event triggered periodic operation, for example as shown in Figure 3 and additionally may include the signalling sequence of Figure 2. In these operations, a certain event (e.g. entering a specific area or getting into the proximity of other vehicles or losing GNSS coverage) triggers the NW node to sends a message 330 to UE1 containing QoS information.

In both the request-response and subscription models, the UE may signal its capabilities related to positioning and position determination. For example, the UE may signal if it is equipped with GNSS receiver, what RAT capabilities it has, etc.

In some examples, the UE (e.g. vehicle) may signal a minimum level of positioning QoS or a range of positioning accuracy that is useful or required for it to operate the service/function within the service.

Aspects of the disclosure will now be further described in relation to one or more of the accompanying figures.

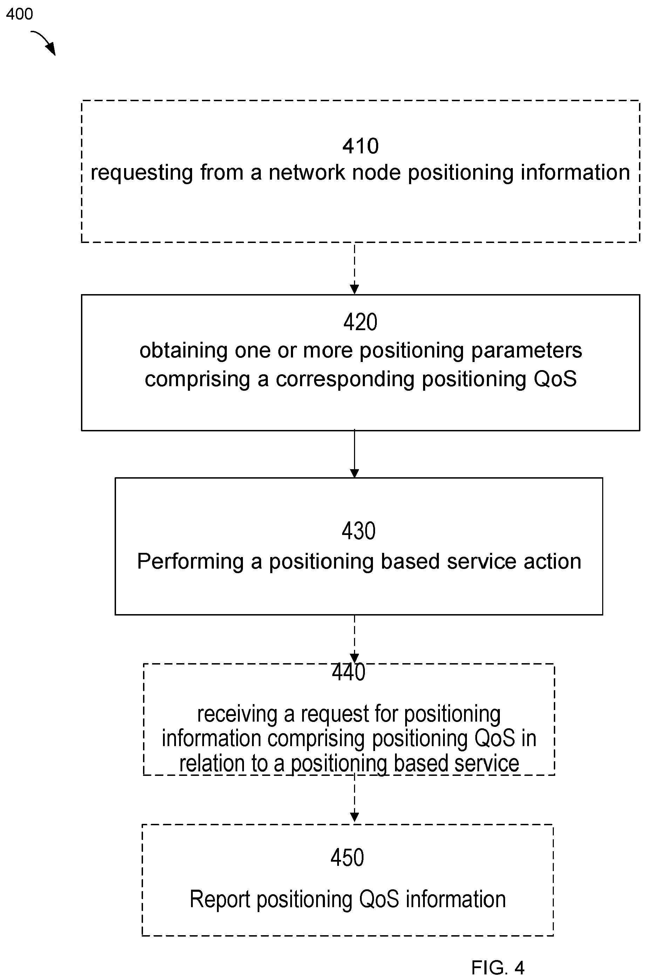

Figure 4 describes a method 400 performed by a wireless device or user equipment, UE. The UE is configured for providing a positioning based service which is dependent on certain QoS of the positioning information needed by the service, as described previously. The method 400 includes, optionally requesting 410 from a network node positioning information. In some examples the request comprises a request to participate in a particular positioning based service or comprises a request for parameters including positioning QoS information in relation to the positioning based service. In some examples the request includes an indication that the UE is, or intends to be, performing the positioning based service. In some examples the UE receives a response to the request which comprises an indication of whether the UE is permitted to participate in the service or not. Such positioning parameters may comprise positioning information derived from neighbouring UEs or other information not determinable by the UE itself, in particular information which relates to a future position of the UE and thus may be used by the UE in performing the positioning based service. The method proceeds with the UE obtaining 420 one or more positioning parameters comprising a corresponding positioning quality of service, QoS. This may comprise positioning parameters determined by the UE itself of received from the network node. The method comprises the UE performing 430 a positioning based service action based on the positioning QoS derived from the one or more positioning parameters. The positioning based service action may include, but is not limited to initiating or terminating the service or making appropriate adjustments to an ongoing service, e.g. restricting the vehicle speed, perform route planning to guarantee service continuity along the route, inform or warn the driver, and hand over vehicle operations to the driver. In some examples the positioning based service action comprises terminating a service based on the positioning QoS being below a threshold for the service. In some examples the positioning based service action comprises adapting the service based on the positioning QoS, for example increasing inter-vehicle distance, or selecting an alternative route. In some example, adapting the service comprises one of limiting the service to a subset of available features and extending the service to include one or more features previously restricted. In some examples the QoS data associated with positioning comprises one or more of: an estimated accuracy or error bound; a confidence interval; a validity period; and a geographical area or cell identifier within which the positioning information is valid. In some examples the positioning QoS information comprises predicted positioning QoS information and the UE performs the positioning based service action either in advance of the predicted positioning QoS occurring or at a predetermined period after obtaining the one or more positioning parameters. As previously described the UE may obtain the one or more positioning quality of service, QoS, parameters by determining one or more positioning parameters itself; and then assign a corresponding positioning QoS to each one of the determined positioning parameters. The method may include the UE receiving 440 a request for positioning information comprising positioning QoS in relation to a positioning based service and reporting 450 the obtained positioning parameters to at least one of a network node and a wireless device. In some examples the UE may be preconfigured as part of the service to report 450 the positioning parameters without receiving an explicit request, for example periodically or in response to an event such as a threshold being met. In some examples the reported positioning parameters comprise one or more of: current time; current position estimation; predicted position estimation at a specific time; positioning accuracy; positioning availability; velocity.

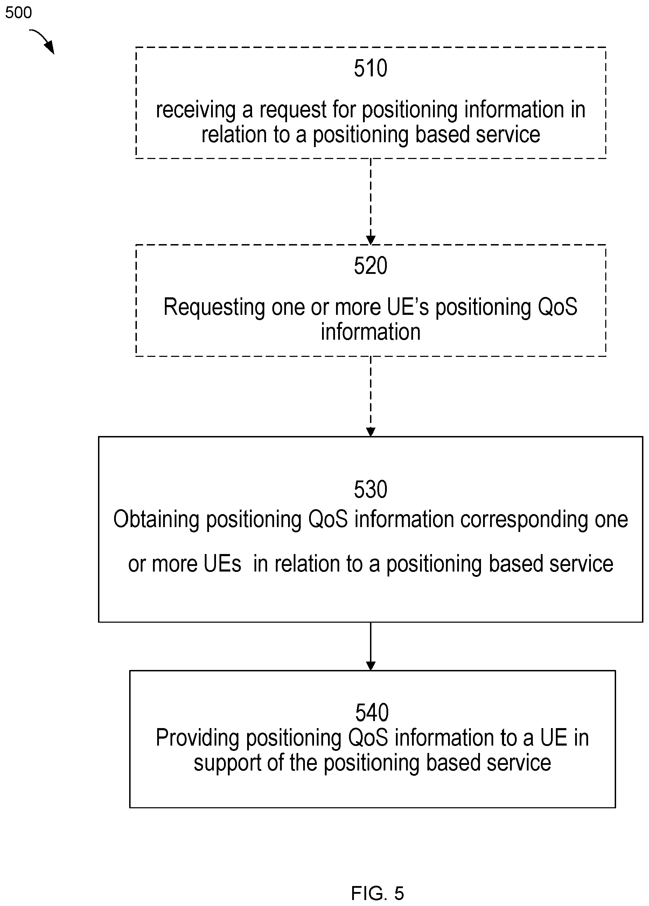

Figure 5 describes a method 500, performed by a network node for supporting a positioning based service. The positioning based service being dependent on certain levels of QoS of the positioning data. The method 500 optionally includes the step 510 of receiving a request for positioning information in relation to a positioning service. In some examples the request may comprise a request of whether a UE may perform or subscribe to a positioning based service, based on corresponding positioning quality of service, QoS of certain positioning parameters. In some examples the request comprises a request for the network node to provide positioning parameters in support of the positioning based service performed by the UE. The request may comprise an indication that the UE is presently or intends to be performing the positioning based service and is requesting related QoS based parameters. The request may comprise a request for being periodically updated with said information. In other examples the request may be for a specific instantaneous positioning information. The method may optionally include the step of requesting 520 positioning QoS information of one or more other UEs connected to the communications network. This request 520 may be to a second network node which receives the positioning information and collates it. In other examples the network node may directly request the information from the one or more UEs. Thus, the method comprises the step of obtaining 530 positioning parameters comprising a corresponding positioning quality of service, QoS, related to a positioning based service. As mentioned above this may comprise explicitly requesting the information. In some examples the positioning QoS information is requested from at least one of: one or more UEs; a positioning server; a second network node. In other examples UEs may subscribe to a service which includes providing such positioning information which enables the network node to obtain said positioning parameters. The method proceeds with the step of providing 540, to the UE, QoS positioning information in support of the positioning based service performed by the UE. In some examples the positioning information comprise parameters from which the QoS of the positioning data can be derived. The provision of such information, as described previously, may enable the UE to perform a specific action in relation to the positioning based service in dependence on certain QoS of the corresponding positioning data. In some examples the positioning information comprises instructions to the UE for terminating or adapting a service based on the obtained positioning QoS being below a threshold for the service. In other examples the method comprises separate steps for subscribing to the service and separate steps for accepting, adapting or terminating the service. For example the UE is subscribed to a service managed by the network node, wherein the network node determines whether subscription to the service is permitted based on the obtained and/or determined future positioning QoS. In some examples adapting the service comprises limiting the service to a subset of available features or extending the service to include one or more features previously restricted based on the obtained positioning QoS.

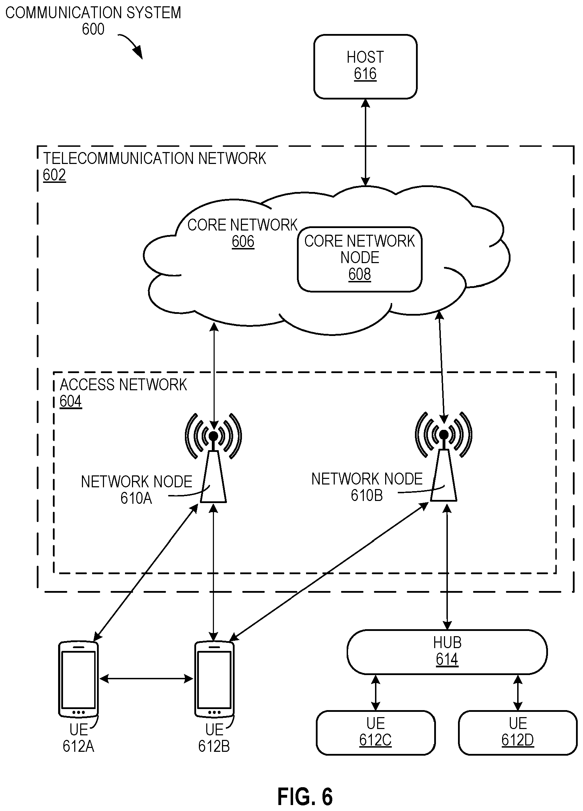

Figure 6 shows an example of a communication system 600 in accordance with some embodiments. In the example, the communication system 600 includes a telecommunication network 602 that includes an access network 604, such as a radio access network (RAN), and a core network 606, which includes one or more core network nodes 608. The access network 604 includes one or more access network nodes, such as network nodes 610a and 610b (one or more of which may be generally referred to as network nodes 610), or any other similar 3rd Generation Partnership Project (3GPP) access node or non-3GPP access point. The network nodes 610 facilitate direct or indirect connection of user equipment (UE), such as by connecting UEs 612a, 612b, 612c, and 612d (one or more of which may be generally referred to as UEs 612) to the core network 606 over one or more wireless connections. Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 600 may include any number of wired or wireless networks, network nodes, UEs, and/or any other components or systems that may facilitate or participate in the communication of data and/or signals whether via wired or wireless connections. The communication system 600 may include and/or interface with any type of communication, telecommunication, data, cellular, radio network, and/or other similar type of system. The UEs 612 may be any of a wide variety of communication devices, including wireless devices arranged, configured, and/or operable to communicate wirelessly with the network nodes 610 and other communication devices. Similarly, the network nodes 610 are arranged, capable, configured, and/or operable to communicate directly or indirectly with the UEs 612 and/or with other network nodes or equipment in the telecommunication network 602 to enable and/or provide network access, such as wireless network access, and/or to perform other functions, such as administration in the telecommunication network 602.

In the depicted example, the core network 606 may connect the network nodes 610 to one or more hosts, such as host 616. These connections may be direct or indirect via one or more intermediary networks or devices. In other examples, network nodes may be directly coupled to hosts. The core network 606 includes one more core network nodes (e.g., core network node 608) that are structured with hardware and software components. Features of these components may be substantially similar to those described with respect to the UEs, network nodes, and/or hosts, such that the descriptions thereof are generally applicable to the corresponding components of the core network node 608. Example core network nodes include functions of one or more of a Mobile Switching Centre (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF),

The host 616 may be under the ownership or control of a service provider other than an operator or provider of the access network 604 and/or the telecommunication network 602, and may be operated by the service provider or on behalf of the service provider. The host 616 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance centre, or any other such function performed by a server. Specifically, the host may provide support for a positioning based service as described herein, for example the subscription to the service may be configured and/or controlled by a host service.

As a whole, the communication system 600 of Figure 6 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 602 is a cellular network that implements 3GPP standardized features. Accordingly, the telecommunications network 602 may support network slicing to provide different logical networks to different devices that are connected to the telecommunication network 602. For example, the telecommunications network 602 may provide Ultra Reliable Low Latency Communication (URLLC) services to some UEs, while providing Enhanced Mobile Broadband (eMBB) services to other UEs, and/or Massive Machine Type Communication (mMTC)/Massive loT services to yet further UEs.

In some examples, the UEs 612 are configured to transmit and/or receive information without direct human interaction. For instance, a UE may be designed to transmit information to the access network 604 on a predetermined schedule, when triggered by an internal or external event, or in response to requests from the access network 604. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In one example, the hub 614 communicates with the access network 604 to facilitate indirect communication between one or more UEs (e.g., UE 612c and/or 612d) and network nodes (e.g., network node 610b). In some examples, the hub 614 may be a controller, router, content source and analytics, or any of the other communication devices described herein regarding UEs. For example, the hub 614 may be a broadband router enabling access to the core network 606 for the UEs. As another example, the hub 614 may be a controller that sends commands or instructions to one or more actuators in the UEs. Commands or instructions may be received from the UEs, network nodes 610, or by executable code, script, process, or other instructions in the hub 614. As another example, the hub 614 may be a data collector that acts as temporary storage for UE data and, in some embodiments, may perform analysis or other processing of the data. As another example, the hub 614 may be a content source. For example, for a UE that is a VR headset, display, loudspeaker or other media delivery device, the hub 614 may retrieve VR assets, video, audio, or other media or data related to sensory information via a network node, which the hub 614 then provides to the UE either directly, after performing local processing, and/or after adding additional local content. In still another example, the hub 614 acts as a proxy server or orchestrator for the UEs, in particular in if one or more of the UEs are low energy loT devices.

The hub 614 may have a constant/persistent or intermittent connection to the network node 610b. The hub 614 may also allow for a different communication scheme and/or schedule between the hub 614 and UEs (e.g., UE 612c and/or 612d), and between the hub 614 and the core network 606. In other examples, the hub 614 is connected to the core network 606 and/or one or more UEs via a wired connection. Moreover, the hub 614 may be configured to connect to an M2M service provider over the access network 604 and/or to another UE over a direct connection. In some scenarios, UEs may establish a wireless connection with the network nodes 610 while still connected via the hub 614 via a wired or wireless connection. In some embodiments, the hub 614 may be a dedicated hub - that is, a hub whose primary function is to route communications to/from the UEs from/to the network node 610b. In other embodiments, the hub 614 may be a non-dedicated hub - that is, a device which is capable of operating to route communications between the UEs and network node 610b, but which is additionally capable of operating as a communication start and/or end point for certain data channels.

In some examples the system 600 is configured for supporting a positioning based service, which is dependent on the QoS of the positioning data required for the service. The system comprising at least a first user equipment, UE 612 configured to participate in a particular positioning based service and receive one or more positioning parameters from a first network node 610 one or more positioning parameters comprising a corresponding positioning quality of service, QoS and perform, based on positioning QoS derived from one or more positioning parameters, a positioning based service action. The first network node being configured to receive one or more positioning parameters corresponding to at least a second UE 612. The one or more positioning parameters comprising a corresponding positioning quality of service, QoS. For example, the network node may receive the one or more positioning parameters directly from the second or in other examples the network node may receive the one or more positioning parameters which correspond to the second UE indirectly, e.g. signalled from another network node or core network node 608 such as an ESMLC or a host 616. The network node 610 is further configured to provide, to the first UE 612 the positioning parameters in support of the positioning based service performed by the first UE 612, thereby enabling the UE to perform said action. The system as described may be further configured to perform any of the embodiments disclosed herein.

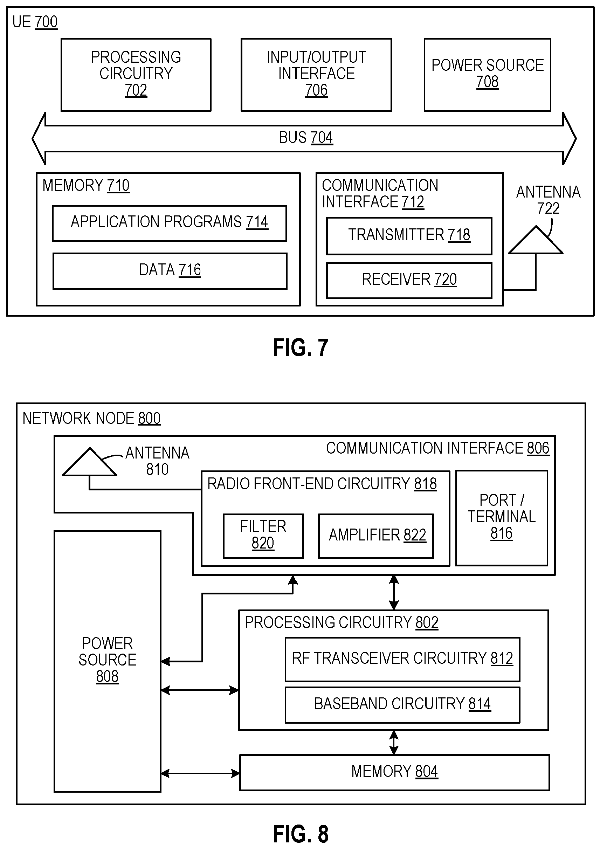

Figure 7 shows a UE 700 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller).

Alternatively, a UE may represent a device that is not intended for sale to, or operation by, an end user but which may be associated with or operated for the benefit of a user (e.g., a smart power meter).

The UE 700 includes processing circuitry 702 that is operatively coupled via a bus 704 to an input/output interface 706, a power source 708, a memory 710, a communication interface 712, and/or any other component, or any combination thereof. Certain UEs may utilize all or a subset of the components shown in Figure 7. The level of integration between the components may vary from one UE to another UE. Further, certain UEs may contain multiple instances of a component, such as multiple processors, memories, transceivers, transmitters, receivers, etc. The processing circuitry 702 is configured to process instructions and data and may be configured to implement any sequential state machine operative to execute instructions stored as machine-readable computer programs in the memory 710. The processing circuitry 702 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 702 may include multiple central processing units (CPUs). In an example, the input/output interface 706 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 700. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 708 is structured as a battery or battery pack. Other types of power sources, such as an external power source (e.g., an electricity outlet), photovoltaic device, or power cell, may be used. The power source 708 may further include power circuitry for delivering power from the power source 708 itself, and/or an external power source, to the various parts of the UE 700 via input circuitry or an interface such as an electrical power cable. Delivering power may be, for example, for charging of the power source 708. Power circuitry may perform any formatting, converting, or other modification to the power from the power source 708 to make the power suitable for the respective components of the UE 700 to which power is supplied. The memory 710 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 710 includes one or more application programs 714, such as an operating system, web browser application, a widget, gadget engine, or other application, and corresponding data 716. The memory 710 may store, for use by the UE 700, any of a variety of various operating systems or combinations of operating systems. The memory 710 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 710 may allow the UE 700 to access instructions, application programs and the like, stored on transitory or non-transitory memory media, to off-load data, or to upload data. An article of manufacture, such as one utilizing a communication system may be tangibly embodied as or in the memory 710, which may be or comprise a device-readable storage medium.

The processing circuitry 702 may be configured to communicate with an access network or other network using the communication interface 712. The communication interface 712 may comprise one or more communication subsystems and may include or be communicatively coupled to an antenna 722. The communication interface 712 may include one or more transceivers used to communicate, such as by communicating with one or more remote transceivers of another device capable of wireless communication (e.g., another UE or a network node in an access network). Each transceiver may include a transmitter 718 and/or a receiver 720 appropriate to provide network communications (e.g., optical, electrical, frequency allocations, and so forth). Moreover, the transmitter 718 and receiver 720 may be coupled to one or more antennas (e.g., antenna 722) and may share circuit components, software or firmware, or alternatively be implemented separately.

In some examples, communication functions of the communication interface 712 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 712, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient). As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an loT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an loT device comprises circuitry and/or software in dependence of the intended application of the loT device in addition to other components as described in relation to the UE 700 shown in Figure 7.

As yet another specific example, in an loT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-loT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

In some examples the UE 700 is configured for performing a positioning based service, wherein the service is dependent on certain QoS levels of the associated positioning data. The UE 700 is configured to obtain one or more positioning parameters comprising a corresponding positioning quality of service, QoS, and perform, based on the positioning QoS derived from the one or more positioning parameters, a positioning based service action. The UE 700 may be further configured to perform any one of the embodiments or examples described herein as appropriate for the UE when performing said service.

Figure 8 shows a network node 800 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 800 includes a processing circuitry 802, a memory 804, a communication interface 806, and a power source 808. The network node 800 may be composed of multiple physically separate components (e.g., a NodeB component and a RNC component, or a BTS component and a BSC component, etc.), which may each have their own respective components. In certain scenarios in which the network node 800 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 800 may be configured to support multiple radio access technologies (RATs).

In such embodiments, some components may be duplicated (e.g., separate memory 804 for different RATs) and some components may be reused (e.g., a same antenna 810 may be shared by different RATs). The network node 800 may also include multiple sets of the various illustrated components for different wireless technologies integrated into network node 800, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 800.

The processing circuitry 802 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 800 components, such as the memory 804, to provide network node 800 functionality. In some embodiments, the processing circuitry 802 includes a system on a chip (SOC). In some embodiments, the processing circuitry 802 includes one or more of radio frequency (RF) transceiver circuitry 812 and baseband processing circuitry 814. In some embodiments, the radio frequency (RF) transceiver circuitry 812 and the baseband processing circuitry 814 may be on separate chips (or sets of chips), boards, or units, such as radio units and digital units. In alternative embodiments, part or all of RF transceiver circuitry 812 and baseband processing circuitry 814 may be on the same chip or set of chips, boards, or units.

The memory 804 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 802. The memory 804 may store any suitable instructions, data, or information, including a computer program, software, an application including one or more of logic, rules, code, tables, and/or other instructions capable of being executed by the processing circuitry 802 and utilized by the network node 800. The memory 804 may be used to store any calculations made by the processing circuitry 802 and/or any data received via the communication interface 806. In some embodiments, the processing circuitry 802 and memory 804 is integrated.

The communication interface 806 is used in wired or wireless communication of signaling and/or data between a network node, access network, and/or UE. As illustrated, the communication interface 806 comprises port(s)/terminal(s) 816 to send and receive data, for example to and from a network over a wired connection. The communication interface 806 also includes radio front-end circuitry 818 that may be coupled to, or in certain embodiments a part of, the antenna 810. Radio front-end circuitry 818 comprises filters 820 and amplifiers 822. The radio front-end circuitry 818 may be connected to an antenna 810 and processing circuitry 802. The radio front-end circuitry may be configured to condition signals communicated between antenna 810 and processing circuitry 802. The radio front-end circuitry 818 may receive digital data that is to be sent out to other network nodes or UEs via a wireless connection. The radio front-end circuitry 818 may convert the digital data into a radio signal having the appropriate channel and bandwidth parameters using a combination of filters 820 and/or amplifiers 822. The radio signal may then be transmitted via the antenna 810. Similarly, when receiving data, the antenna 810 may collect radio signals which are then converted into digital data by the radio front-end circuitry 818. The digital data may be passed to the processing circuitry 802. In other embodiments, the communication interface may comprise different components and/or different combinations of components.

In certain alternative embodiments, the network node 800 does not include separate radio front-end circuitry 818, instead, the processing circuitry 802 includes radio front-end circuitry and is connected to the antenna 810. Similarly, in some embodiments, all or some of the RF transceiver circuitry 812 is part of the communication interface 806. In still other embodiments, the communication interface 806 includes one or more ports or terminals 816, the radio front-end circuitry 818, and the RF transceiver circuitry 812, as part of a radio unit (not shown), and the communication interface 806 communicates with the baseband processing circuitry 814, which is part of a digital unit (not shown). The antenna 810 may include one or more antennas, or antenna arrays, configured to send and/or receive wireless signals. The antenna 810 may be coupled to the radio front-end circuitry 818 and may be any type of antenna capable of transmitting and receiving data and/or signals wirelessly. In certain embodiments, the antenna 810 is separate from the network node 800 and connectable to the network node 800 through an interface or port. The antenna 810, communication interface 806, and/or the processing circuitry 802 may be configured to perform any receiving operations and/or certain obtaining operations described herein as being performed by the network node. Any information, data and/or signals may be received from a UE, another network node and/or any other network equipment. Similarly, the antenna 810, the communication interface 806, and/or the processing circuitry 802 may be configured to perform any transmitting operations described herein as being performed by the network node. Any information, data and/or signals may be transmitted to a UE, another network node and/or any other network equipment.

The power source 808 provides power to the various components of network node 800 in a form suitable for the respective components (e.g., at a voltage and current level needed for each respective component). The power source 808 may further comprise, or be coupled to, power management circuitry to supply the components of the network node 800 with power for performing the functionality described herein. For example, the network node 800 may be connectable to an external power source (e.g., the power grid, an electricity outlet) via an input circuitry or interface such as an electrical cable, whereby the external power source supplies power to power circuitry of the power source 808. As a further example, the power source 808 may comprise a source of power in the form of a battery or battery pack which is connected to, or integrated in, power circuitry. The battery may provide backup power should the external power source fail.

Embodiments of the network node 800 may include additional components beyond those shown in Figure 8 for providing certain aspects of the network node's functionality, including any of the functionality described herein and/or any functionality necessary to support the subject matter described herein. For example, the network node 800 may include user interface equipment to allow input of information into the network node 800 and to allow output of information from the network node 800. This may allow a user to perform diagnostic, maintenance, repair, and other administrative functions for the network node 800. In some examples the network node 800 is configured to support a positioning based service wherein the positioning based service is dependent on certain QoS levels of the associated positioning data required to perform the service. The service is typically performed at least in part by a UE 700 configured to perform the service or related part of the service. In the example, the network node 800 is configured to obtain positioning parameters comprising a corresponding positioning quality of service, QoS, related to a positioning based service and provide, to a UE 800, the positioning parameters in support of the positioning based service performed by the UE 800. In further examples, the network node is configured to perform any one of the embodiments or examples described herein, in relation to a network node for supporting said positioning based service.

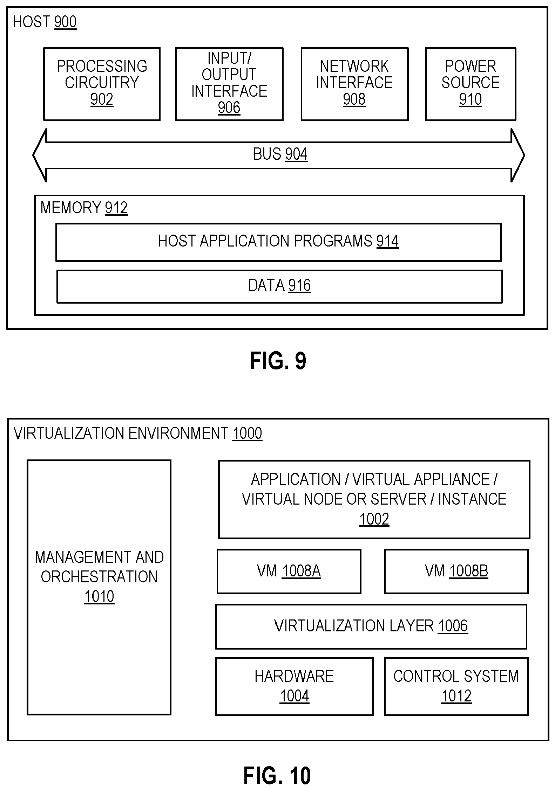

Figure 9 is a block diagram of a host 900, which may be an embodiment of the host 616 of Figure 6, in accordance with various aspects described herein. As used herein, the host 900 may be or comprise various combinations hardware and/or software, including a standalone server, a blade server, a cloud-implemented server, a distributed server, a virtual machine, container, or processing resources in a server farm. The host 900 may provide one or more services to one or more UEs.

The host 900 includes processing circuitry 902 that is operatively coupled via a bus 904 to an input/output interface 906, a network interface 908, a power source 910, and a memory 912. Other components may be included in other embodiments. Features of these components may be substantially similar to those described with respect to the devices of previous figures, such as Figures 7 and 8, such that the descriptions thereof are generally applicable to the corresponding components of host 900.

The memory 912 may include one or more computer programs including one or more host application programs 914 and data 916, which may include user data, e.g., data generated by a UE for the host 900 or data generated by the host 900 for a UE. Embodiments of the host 900 may utilize only a subset or all of the components shown. The host application programs 914 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 914 may also provide for user authentication and licensing checks and may periodically report health, routes, and content availability to a central node, such as a device in or on the edge of a core network. Accordingly, the host 900 may select and/or indicate a different host for over-the-top services for a UE. The host application programs 914 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc. In some examples the host performs one or more of the examples described herein, in relation to providing a positioning based service. For example, the UE may be required to subscribe to said service via a host server. The procedures in relation to managing the service or setting of criteria or thresholds corresponding to the QoS of the positioning data may be provided or determined by the host 900.

Figure 10 is a block diagram illustrating a virtualization environment 1000 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1000 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1002 (which may alternatively be called software instances, virtual appliances, network functions, virtual nodes, virtual network functions, etc.) are run in the virtualization environment Q400 to implement some of the features, functions, and/or benefits of some of the embodiments disclosed herein. Hardware 1004 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1006 (also referred to as hypervisors or virtual machine monitors (VMMs)), provide VMs 1008a and 1008b (one or more of which may be generally referred to as VMs 1008), and/or perform any of the functions, features and/or benefits described in relation with some embodiments described herein. The virtualization layer 1006 may present a virtual operating platform that appears like networking hardware to the VMs 1008. The VMs 1008 comprise virtual processing, virtual memory, virtual networking or interface and virtual storage, and may be run by a corresponding virtualization layer 1006. Different embodiments of the instance of a virtual appliance 1002 may be implemented on one or more of VMs 1008, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centres, and customer premise equipment.

In the context of NFV, a VM 1008 may be a software implementation of a physical machine that runs programs as if they were executing on a physical, non-virtualized machine. Each of the VMs 1008, and that part of hardware 1004 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1008 on top of the hardware 1004 and corresponds to the application 1002.

Hardware 1004 may be implemented in a standalone network node with generic or specific components. Hardware 1004 may implement some functions via virtualization. Alternatively, hardware 1004 may be part of a larger cluster of hardware (e.g. such as in a data center or CPE) where many hardware nodes work together and are managed via management and orchestration 1010, which, among others, oversees lifecycle management of applications 1002. In some embodiments, hardware 1004 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1012 which may alternatively be used for communication between hardware nodes and radio units.

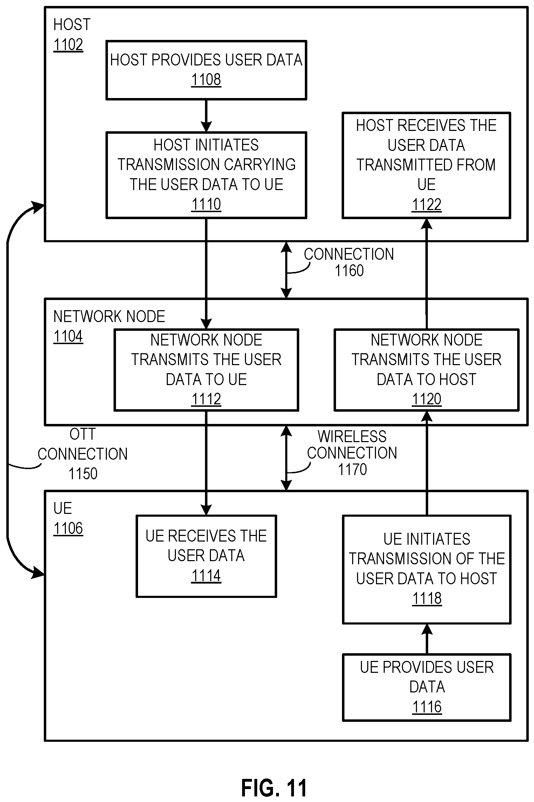

Figure 11 shows a communication diagram of a host 1102 communicating via a network node 1104 with a UE 1106 over a partially wireless connection in accordance with some embodiments. Example implementations, in accordance with various embodiments, of the UE (such as a UE 612a of Figure 6 and/or UE 700 of Figure 7), network node (such as network node 610a of Figure 6 and/or network node 800 of Figure 8), and host (such as host 616 of Figure 6 and/or host 900 of Figure 9) discussed in the preceding paragraphs will now be described with reference to Figure 11. Like host 900, embodiments of host 1102 include hardware, such as a communication interface, processing circuitry, and memory. The host 1102 also includes software, which is stored in or accessible by the host 1102 and executable by the processing circuitry. The software includes a host application that may be operable to provide a service to a remote user, such as the UE 1106 connecting via an over-the-top (OTT) connection 1150 extending between the UE 1106 and host 1102. In providing the service to the remote user, a host application may provide user data which is transmitted using the OTT connection 1150.

The network node 1104 includes hardware enabling it to communicate with the host 1102 and UE 1106. The connection 1160 may be direct or pass through a core network (like core network 606 of Figure 6) and/or one or more other intermediate networks, such as one or more public, private, or hosted networks. For example, an intermediate network may be a backbone network or the Internet. The UE 1106 includes hardware and software, which is stored in or accessible by UE 1106 and executable by the UE's processing circuitry. The software includes a client application, such as a web browser or operator-specific "app" that may be operable to provide a service to a human or non-human user via UE 1106 with the support of the host 1102. In the host 1102, an executing host application may communicate with the executing client application via the OTT connection 1150 terminating at the UE 1106 and host 1102. In providing the service to the user, the UE's client application may receive request data from the host's host application and provide user data in response to the request data. The OTT connection 1150 may transfer both the request data and the user data. The UE's client application may interact with the user to generate the user data that it provides to the host application through the OTT connection 1150.

The OTT connection 1150 may extend via a connection 1160 between the host 1102 and the network node 1104 and via a wireless connection 1170 between the network node 1104 and the UE 1106 to provide the connection between the host 1102 and the UE 1106. The connection 1160 and wireless connection 1170, over which the OTT connection 1150 may be provided, have been drawn abstractly to illustrate the communication between the host 1102 and the UE 1106 via the network node 1104, without explicit reference to any intermediary devices and the precise routing of messages via these devices.

As an example of transmitting data via the OTT connection 1150, in step 1108, the host 1102 provides user data, which may be performed by executing a host application. In some embodiments, the user data is associated with a particular human user interacting with the UE 1106. In other embodiments, the user data is associated with a UE 1106 that shares data with the host 1102 without explicit human interaction. In step 1110, the host 1102 initiates a transmission carrying the user data towards the UE 1106. The host 1102 may initiate the transmission responsive to a request transmitted by the UE 1106. The request may be caused by human interaction with the UE 1106 or by operation of the client application executing on the UE 1106. The transmission may pass via the network node 1104, in accordance with the teachings of the embodiments described throughout this disclosure. Accordingly, in step 1112, the network node 1104 transmits to the UE 1106 the user data that was carried in the transmission that the host 1102 initiated, in accordance with the teachings of the embodiments described throughout this disclosure. In step 1114, the UE 1106 receives the user data carried in the transmission, which may be performed by a client application executed on the UE 1106 associated with the host application executed by the host 1102.

In some examples, the UE 1106 executes a client application which provides user data to the host 1102. The user data may be provided in reaction or response to the data received from the host 1102. Accordingly, in step 1116, the UE 1106 may provide user data, which may be performed by executing the client application. In providing the user data, the client application may further consider user input received from the user via an input/output interface of the UE 1106. Regardless of the specific manner in which the user data was provided, the UE 1106 initiates, in step 1118, transmission of the user data towards the host 1102 via the network node 1104. In step 1120, in accordance with the teachings of the embodiments described throughout this disclosure, the network node 1104 receives user data from the UE 1106 and initiates transmission of the received user data towards the host 1102. In step 1122, the host 1102 receives the user data carried in the transmission initiated by the UE 1106.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

It should be noted that the above-mentioned examples illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method (400) performed by a user equipment, UE, (10) for providing a positioning based service, the method (600) comprising:
obtaining (420) one or more positioning parameters comprising a positioning quality of service, QoS information corresponding to positioning information, wherein the positioning QoS information is related to the positioning based service and refers to information that characterises the quality of the positioning information, wherein the positioning QoS information comprises at least the accuracy of the positioning information, the update rate of the positioning information and the method used for acquiring the positioning information;
performing (430) a positioning based service action based on the positioning QoS information obtained from the one or more positioning parameters, wherein the positioning based service action comprises adapting the service based on the positioning QoS, wherein adapting the service comprises one of limiting the service to a subset of available features and extending the service to include one or more features previously restricted.

2. The method of claim 1, wherein the positioning based service action comprises terminating a service based on the positioning QoS being below a threshold for the service.

3. The method of any one of the preceding claims, wherein the positioning QoS information comprises predicted positioning QoS information and wherein the UE performs the positioning based service action either in advance of the predicted positioning QoS occurring or at a predetermined period after obtaining the one or more positioning parameters.

4. The method of any one of the preceding claims, wherein obtaining the one or more positioning parameters comprises or further comprises determining one or more positioning parameters; and,
assigning a corresponding positioning QoS to each one of the determined positioning parameters.

5. The method of claim 4, wherein the positioning based service action comprises or further comprises, reporting (450) the obtained positioning parameters to at least one of a network node and a wireless device.

6. The method of claim 5, wherein the reported positioning parameters comprise one or more of:
current time;
current position estimation;
predicted position estimation at a specific time;
positioning sensor accuracy;
positioning sensor availability;
velocity.

7. The method of any one of the preceding claims, further comprising requesting (610) from a network node positioning information in relation to the positioning based service, wherein the request comprises a request to participate in a particular positioning based service and receiving a response to the request comprising an indication of whether the UE is permitted to participate in the service or not.

8. The method of any one of the preceding claims, further comprising the following steps performed by a network node for providing the positioning information for the positioning based service:
obtaining (530) the positioning parameters;
providing (540), to the UE, the positioning parameters

9. The method of claim 8, further comprising receiving (510), by the network node a request from a UE for positioning QoS information in relation to the positioning based service.

10. The method of claim 8 or 9, further comprising the network node requesting (520) positioning QoS information corresponding to one or more UEs.

11. The method of claim 10, wherein the positioning QoS information is requested from at least one of:
one or more UEs;
a positioning server;
a second network node.

12. A user equipment, UE, (10, 612, 700) for providing a positioning based service, wherein the UE is configured to:
obtain one or more positioning parameters comprising a positioning quality of service, QoS information corresponding to positioning information, wherein the positioning QoS information is related to the positioning based service and refers to information that characterises the quality of the positioning information, wherein the positioning QoS information comprises at least the accuracy of the positioning information, the update rate of the positioning information and the method used for acquiring the positioning information;
perform, based on the positioning QoS derived from the one or more positioning parameters, a positioning based service action,
wherein the positioning based service action comprises adapting the service based on the positioning QoS, and wherein adapting the service comprises one of limiting the service to a subset of available features and extending the service to include one or more features previously restricted.

13. The UE of claim 12, further configured to perform the method of any one of claims 2 to 7.

14. A system comprising the UE of claim 13 and a network node (20, 610, 800) for providing positioning information for a positioning based service, the network node is configured to perform the steps of the method of any one of claims 8 to 11

## Patentansprüche

1. Verfahren (400), das von einer Benutzereinrichtung, UE, (10) durchgeführt wird, zur Bereitstellung eines positionsbestimmungsbasierten Dienstes, wobei das Verfahren (600) Folgendes umfasst:
Erhalten (420) eines oder mehrerer Positionsbestimmungsparameter, die Positionsbestimmungs-Dienstqualitätsinformationen, Positionsbestimmungs-QoS-Informationen, umfassen, die Positionsbestimmungsinformationen entsprechen, wobei die Positionsbestimmungs-QoS-Informationen mit dem positionsbestimmungsbasierten Dienst in Beziehung stehen und sich auf Informationen beziehen, die die Qualität der Positionsbestimmungsinformationen kennzeichnen, wobei die Positionsbestimmungs-QoS-Informationen mindestens eines von der Genauigkeit der Positionsbestimmungsinformationen, der Aktualisierungsrate der Positionsbestimmungsinformationen und dem zum Erfassen der Positionsbestimmungsinformationen verwendeten Verfahren umfassen;
Durchführen (430) einer positionsbestimmungsbasierten Dienstaktion basierend auf den Positionsbestimmungs-QoS-Informationen, die aus dem einen oder den mehreren Positionsbestimmungsparametern erhalten werden, wobei die positionsbestimmungsbasierte Dienstaktion Anpassen des Dienstes basierend auf der Positionsbestimmungs-QoS umfasst, wobei das Anpassen des Dienstes eines von Beschränken des Dienstes auf eine Teilmenge von verfügbaren Merkmalen und Erweitern des Dienstes um ein oder mehrere zuvor eingeschränkte Merkmale umfasst.

2. Verfahren nach Anspruch 1, wobei die positionsbestimmungsbasierte Dienstaktion Beenden eines Dienstes basierend darauf umfasst, dass die Positionsbestimmungs-QoS unter einem Schwellenwert für diesen Dienst liegt.

3. Verfahren nach einem der vorhergehenden Ansprüche, wobei die Positionsbestimmungs-QoS-Informationen vorhergesagte Positionsbestimmungs-QoS-Informationen umfassen und wobei die UE die positionsbestimmungsbasierte Dienstaktion entweder vor dem Eintreten der vorhergesagten Positionsbestimmungs-QoS oder zu einem vorbestimmten Zeitpunkt nach dem Erhalten des einen oder der mehreren Positionsbestimmungsparameter durchführt.

4. Verfahren nach einem der vorhergehenden Ansprüche, wobei das Erhalten des einen oder der mehreren Positionsbestimmungsparameter Bestimmen eines oder mehrerer Positionsbestimmungsparameter umfasst oder ferner umfasst; und
Zuordnen einer entsprechenden Positionsbestimmungs-QoS zu jedem der bestimmten Positionsbestimmungsparameter.

5. Verfahren nach Anspruch 4, wobei die positionsbestimmungsbasierte Dienstaktion Melden (450) der erhaltenen Positionsbestimmungsparameter an mindestens eines von einem Netzwerkknoten und einer drahtlosen Vorrichtung umfasst oder ferner umfasst.

6. Verfahren nach Anspruch 5, wobei die gemeldeten Positionsbestimmungsparameter eines oder mehrere von Folgenden umfassen:
aktuelle Zeit;
Schätzung einer aktuellen Position;
Schätzung einer vorhergesagten Position zu einem spezifischen Zeitpunkt;
Genauigkeit des Positionsbestimmungssensors;
Verfügbarkeit des Positionsbestimmungssensors;
Geschwindigkeit.

7. Verfahren nach einem der vorhergehenden Ansprüche, ferner umfassend Anfordern (610) von Positionsbestimmungsinformationen in Bezug auf den positionsbestimmungsbasierten Dienst von einem Netzwerkknoten, wobei die Anforderung eine Anforderung zum Teilnehmen an einem spezifischen positionsbestimmungsbasierten Dienst umfasst, und Empfangen einer Antwort auf die Anforderung, die eine Angabe dessen umfasst, ob die UE an dem Dienst teilnehmen darf oder nicht.

8. Verfahren nach einem der vorhergehenden Ansprüche, ferner umfassend die folgenden Schritte, die von einem Netzwerkknoten ausgeführt werden, zur Bereitstellung der Positionsbestimmungsinformationen für den positionsbestimmungsbasierten Dienst:
Erhalten (530) der Positionsbestimmungsparameter;
Bereitstellen (540) der Positionsbestimmungsparameter an die UE.

9. Verfahren nach Anspruch 8, ferner umfassend Empfangen (510) einer Anforderung für Positionsbestimmungs-QoS-Informationen in Bezug auf den positionsbestimmungsbasierten Dienst durch den Netzwerkknoten von einer UE.

10. Verfahren nach Anspruch 8 oder 9, ferner umfassend, dass der Netzwerkknoten Positionsbestimmungs-QoS-Informationen anfordert (520), die einer oder mehreren UEs entsprechen.

11. Verfahren nach Anspruch 10, wobei die Positionsbestimmungs-QoS-Informationen von mindestens einem von Folgenden angefordert werden:
einer oder mehreren UEs;
einem Positionsbestimmungsserver;
einem zweiten Netzwerkknoten.

12. Benutzereinrichtung, UE, (10, 612, 700) zum Bereitstellen eines positionsbestimmungsbasierten Dienstes, wobei die UE zu Folgendem konfiguriert ist:
Erhalten eines oder mehrerer Positionsbestimmungsparameter, die Positionsbestimmungs-Dienstqualitätsinformationen, Positionsbestimmungs-QoS-Informationen, umfassen, die Positionsbestimmungsinformationen entsprechen, wobei die Positionsbestimmungs-QoS-Informationen mit dem positionsbestimmungsbasierten Dienst in Beziehung stehen und sich auf Informationen beziehen, die die Qualität der Positionsbestimmungsinformationen kennzeichnen, wobei die Positionsbestimmungs-QoS-Informationen mindestens eines von der Genauigkeit der Positionsbestimmungsinformationen, der Aktualisierungsrate der Positionsbestimmungsinformationen und dem zum Erfassen der Positionsbestimmungsinformationen verwendeten Verfahren umfassen;
Durchführen einer positionsbestimmungsbasierten Dienstaktion basierend auf der aus dem einen oder den mehreren Positionsbestimmungsparametern abgeleiteten Positionsbestimmungs-QoS,
wobei die positionsbestimmungsbasierte Dienstaktion Anpassen des Dienstes basierend auf der Positionsbestimmungs-QoS umfasst, wobei das Anpassen des Dienstes eines von Beschränken des Dienstes auf eine Teilmenge von verfügbaren Merkmalen und Erweitern des Dienstes um ein oder mehrere zuvor eingeschränkte Merkmale umfasst.

13. UE nach Anspruch 12, die ferner zum Durchführen des Verfahrens nach einem der Ansprüche 2 bis 7 ausgelegt ist.

14. System, umfassend die UE nach Anspruch 13 und einen Netzwerkknoten (20, 610, 800) zum Bereitstellen von Positionsbestimmungsinformationen für einen positionsbestimmungsbasierten Dienst, wobei der Netzwerkknoten zum Ausführen der Schritte des Verfahrens nach einem der Ansprüche 8 bis 11 konfiguriert ist.

## Revendications

1. Procédé (400) réalisé par un équipement utilisateur, UE, (10) pour fournir un service basé sur positionnement, le procédé (600) comprenant :
l'obtention (420) d'un ou plusieurs paramètres de positionnement comprenant des informations de qualité de service, QoS, de positionnement correspondant à des informations de positionnement, dans lequel les informations de QoS de positionnement sont liées au service basé sur positionnement et réfèrent à des informations qui caractérisent la qualité des informations de positionnement, dans lequel les informations de QoS de positionnement comprennent au moins la précision des informations de positionnement, la fréquence de mise à jour des informations de positionnement et la méthode utilisée pour acquérir les informations de positionnement ;
la réalisation (430) d'une action de service basé sur positionnement sur la base des informations de QoS de positionnement obtenues à partir des un ou plusieurs paramètres de positionnement, dans lequel l'action de service basé sur positionnement comprend l'adaptation du service sur la base de la QoS de positionnement, dans lequel l'adaptation du service comprend l'une parmi la limitation du service à un sous-ensemble de caractéristiques disponibles et l'extension du service pour inclure une ou plusieurs caractéristiques précédemment restreintes.

2. Procédé selon la revendication 1, dans lequel l'action de service basé sur positionnement comprend la terminaison d'un service sur la base du fait que la QoS de positionnement est inférieure à un seuil pour le service.

3. Procédé selon l'une quelconque des revendications précédentes, dans lequel les informations de QoS de positionnement comprennent des informations de QoS de positionnement prédites et dans lequel l'UE réalise l'action de service basé sur positionnement soit à l'avance de la survenance de la QoS de positionnement prédite soit au cours d'une période prédéterminée après l'obtention des un ou plusieurs paramètres de positionnement.

4. Procédé selon l'une quelconque des revendications précédentes, dans lequel l'obtention des un ou plusieurs paramètres de positionnement comprend ou comprend en outre la détermination d'un ou plusieurs paramètres de positionnement ; et
l'attribution d'une QoS de positionnement correspondante à chacun des paramètres de positionnement déterminés.

5. Procédé selon la revendication 4, dans lequel l'action de service basé sur positionnement comprend ou comprend en outre le signalement (450) des paramètres de positionnement obtenus à au moins l'un parmi un nœud de réseau et un dispositif sans fil.

6. Procédé selon la revendication 5, dans lequel les paramètres de positionnement signalés comprennent une ou plusieurs parmi :
une heure actuelle ;
une estimation de position actuelle ;
une estimation de position prédite à une heure spécifique ;
une précision de capteur de positionnement ;
une disponibilité de capteur de positionnement ;
une vitesse.

7. Procédé selon l'une quelconque des revendications précédentes, comprenant en outre la demande (610), par un nœud de réseau, d'informations de positionnement en ce qui concerne le service basé sur positionnement, dans lequel la demande comprend une demande de participation à un service basé sur positionnement particulier et la réception d'une réponse à la demande comprenant une indication indiquant si l'UE est autorisé ou non à participer au service.

8. Procédé selon l'une quelconque des revendications précédentes, comprenant en outre les étapes suivantes réalisées par un nœud de réseau pour fournir les informations de positionnement pour le service basé sur positionnement :
l'obtention (530) des paramètres de positionnement ;
la fourniture (540), à l'UE, des paramètres de positionnement.

9. Procédé selon la revendication 8, comprenant en outre la réception (510), par le nœud de réseau, d'une demande, par un UE, d'informations de QoS de positionnement en ce qui concerne le service basé sur positionnement.

10. Procédé selon la revendication 8 ou 9, comprenant en outre la demande (520), par le nœud de réseau, d'informations de QoS de positionnement correspondant à un ou plusieurs UE.

11. Procédé selon la revendication 10, dans lequel les informations de QoS de positionnement sont demandées par au moins l'un parmi :
un ou plusieurs UE ;
un serveur de positionnement ;
un deuxième nœud de réseau.

12. Equipement utilisateur, UE, (10, 612, 700) pour fournir un service basé sur positionnement, dans lequel l'UE est configuré pour :
obtenir un ou plusieurs paramètres de positionnement comprenant des informations de qualité de service, QoS, de positionnement correspondant à des informations de positionnement, dans lequel les informations de QoS de positionnement sont liées au service basé sur positionnement et réfèrent à des informations qui caractérisent la qualité des informations de positionnement, dans lequel les informations de QoS de positionnement comprennent au moins la précision des informations de positionnement, la fréquence de mise à jour des informations de positionnement et la méthode utilisée pour acquérir les informations de positionnement ;
réaliser, sur la base des informations de QoS de positionnement obtenues à partir des un ou plusieurs paramètres de positionnement, une action de service basé sur positionnement, dans lequel l'action de service basé sur positionnement comprend l'adaptation du service sur la base de la QoS de positionnement, et dans lequel l'adaptation du service comprend l'une parmi la limitation du service à un sous-ensemble de caractéristiques disponibles et l'extension du service pour inclure une ou plusieurs caractéristiques précédemment restreintes.

13. UE selon la revendication 12, configuré en outre pour réaliser le procédé selon l'une quelconque des revendications 2 à 7.

14. Système comprenant l'UE selon la revendication 13 et un nœud de réseau (20, 610, 800) pour fournir des informations de positionnement pour un service basé sur positionnement, le nœud de réseau étant configuré pour réaliser les étapes du procédé selon l'une quelconque des revendications 8 à 11.
